(19) Europäisches Patentamt

European Patent Office

Office européen des brevets

(11) **EP 3 633 545 A1**

(12) **DEMANDE DE BREVET EUROPEEN**

(43) Date de publication:
**08.04.2020 Bulletin 2020/15**

(51) Int Cl.:
**G06K 9/00** *(2006.01)* **G06K 9/62** *(2006.01)*

(21) Numéro de dépôt: **19306259.3**

(22) Date de dépôt: **02.10.2019**

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**
Etats d'extension désignés:
**BA ME**
Etats de validation désignés:
**KH MA MD TN**

(30) Priorité: **03.10.2018 FR 1859162**

(71) Demandeur: **Idemia Identity & Security France
92400 Courbevoie (FR)**

(72) Inventeurs:
• **CSILLAG, Dora
92400 COURBEVOIE (FR)**
• **JOURDAS, Cécile
92400 COURBEVOIE (FR)**
• **THIEBAUT, Maxime
92400 COURBEVOIE (FR)**

(74) Mandataire: **Regimbeau
20, rue de Chazelles
75847 Paris Cedex 17 (FR)**

(54) **PROCEDES D'APPRENTISSAGE DE PARAMETRES D'UN RESEAU DE NEURONES A CONVOLUTION, DE DETECTION D'ELEMENTS D'INTERET VISIBLES DANS UNE IMAGE ET D'ASSOCIATION D'ELEMENTS D'INTERET VISIBLES DANS UNE IMAGE**

(57) La présente invention concerne un procédé d'apprentissage de paramètres d'un réseau de neurones à convolution, CNN, par des moyens de traitement de données (11a, 11b, 11c) d'au moins un serveur (1a, 1b, 1c), pour détection d'éléments d'intérêt visibles dans des images, à partir d'au moins une base d'images d'apprentissage dans lesquelles lesdits éléments d'intérêt ainsi que des structures géométriques caractéristiques sont déjà annotés, le CNN comprenant une couche d'encodage pour la génération d'un vecteur de représentation des éléments d'intérêt détectés, le procédé étant caractérisé en ce que ledit vecteur de représentation comprend, pour au moins une première catégorie d'élément d'intérêt à détecter, au moins une valeur descriptive d'au moins une structure géométrique caractéristique de ladite première catégorie d'élément d'intérêt.

La présente invention concerne également un procédé de détection d'éléments d'intérêt visibles dans une image et un procédé d'association d'éléments d'intérêt visibles dans une image.

FIG. 5

EP 3 633 545 A1

**FIG. 6b**

**Description**

DOMAINE TECHNIQUE GENERAL

La présente invention concerne le domaine de l'apprentissage supervisé, et en particulier un procédé d'apprentissage de paramètres d'un réseau de neurones à convolution, un procédé de détection d'éléments d'intérêt visibles dans une image au moyen d'un réseau de neurones à convolution, ainsi qu'un procédé d'association d'éléments d'intérêt visibles dans une image.

ETAT DE L'ART

Les réseaux de neurones sont massivement utilisés pour la classification de données.

Lors d'une phase d'apprentissage automatique (généralement supervisé, c'est-à-dire sur une base de données de référence déjà classifiées), un réseau de neurones « apprend » et devient tout seul capable d'appliquer la même classification à des données inconnues.

Les réseaux de neurones à convolution, ou CNN (Convolutional Neural Networks) sont un type de réseau de neurones dans lequel le motif de connexion entre les neurones est inspiré par le cortex visuel des animaux. Ils sont ainsi particulièrement adaptés à un type particulier de tâche qui est l'analyse d'image, ils permettent en effet avec efficacité la reconnaissance d'éléments d'intérêt tels que des objets ou des personnes dans des images, en particulier dans des applications de sécurité (surveillance automatique, détection de menace, etc.). Pour cela, on apprend le CNN sur des bases d'images d'apprentissage, c'est-à-dire des images dans lesquelles les éléments d'intérêt ont été déjà « annotés », c'est-à-dire mis en évidence et étiquetés avec la catégorie d'élément correspondant.

On connait tout particulièrement une utilisation des CNN pour faire ce que l'on appelle du « tracking », c'est-à-dire du suivi temporel de ces éléments d'intérêt tels que des personnes ou des objets.

Plus précisément, l'objectif est d'analyser une séquence d'images successives (typiquement des frames d'une vidéo, par exemple acquise par une caméra de surveillance), et d'identifier un même élément présent sur plusieurs images de sorte à suivre son déplacement. Chaque élément identifié (par exemple chaque visage) se voit attribuer un identifiant unique (typiquement un nombre entier) commun à toutes les frames. Ainsi, on peut par exemple reconnaître un suspect par son visage, et suivre de proche en proche son déplacement dans une foule.

Aujourd'hui, ces techniques apportent satisfaction mais restent perfectibles. En particulier on rencontre un problème « d'association » entre eux d'éléments lorsque l'un est une sous-partie de l'autre. Par exemple, il parait évident que chaque personne est associée de manière unique et permanente à un visage, ou similairement que chaque véhicule est associé de manière unique et permanente à une plaque d'immatriculation, mais ce lien est parfois complexe à maintenir.

Une première intuition est en effet de partir du principe (dans l'exemple visage/personne) qu'une détection de visage doit être incluse dans la boite de la personne, et donc d'associer un visage avec une détection de personne qui contienne cette détection de visage.

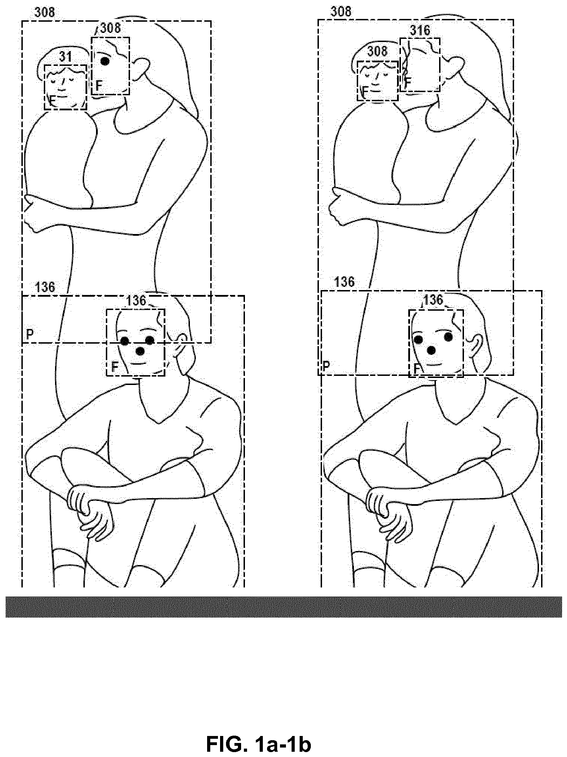

Cette solution n'est pas fiable, car une détection d'un piéton (la boite englobante) peut « contenir » plusieurs visages selon le contexte et la disposition des personnes. Par exemple, en référence aux **figures 1a-1b** (qui représentent deux frames successives de la même scène), un adulte peut tenir un bébé dans ses bras, et la boite de l'adulte contient alors deux détections de visage proches.

Ainsi, d'une part l'algorithme ne sait pas laquelle associer avec la détection de personne, et d'autre part cette association peut être perturbée au cours du temps. Dans l'exemple de la figure 1a, on a bien le bon visage associé à la bonne personne sous l'identifiant 308, et le visage du bébé présente l'identifiant 311, mais lorsque le nez de cette personne pénètre dans la boite du visage du bébé (cas de la figure 1b), on observe un changement de l'association personne-visage : le visage du bébé se voit affecter l'identifiant 308 de l'adulte alors que le visage de l'adulte n'a plus de personne associée et se voit affecter le nouvel identifiant 316. Quand bien même l'association est rétablie quelques images plus loin, on se retrouve avec plus d'identifiants créés que d'éléments réels (on ne sait plus quelle association croire), ce qui fausse tout le tracking.

Il serait par conséquent souhaitable de disposer d'une nouvelle solution d'association entre un élément et une sous-partie de cet élément qui soit simple, fiable et universelle, et ce sans surcoût de temps calcul.

PRESENTATION DE L'INVENTION

Selon un premier aspect, la présente invention concerne un procédé d'apprentissage de paramètres d'un réseau de neurones à convolution, CNN, par des moyens de traitement de données d'au moins un serveur, pour détection d'éléments d'intérêt visibles dans des images, à partir d'au moins une base d'images d'apprentissage dans lesquelles lesdits éléments d'intérêt ainsi que des structures géométriques caractéristiques sont déjà annotés, le CNN comprenant une couche d'encodage pour la génération d'un vecteur de représentation des éléments d'intérêt détectés, le procédé étant caractérisé en ce que ledit vecteur de représentation comprend, pour au moins une première catégorie d'élément d'intérêt à détecter, au moins une valeur descriptive d'au moins une structure géométrique caractéristique de ladite première catégorie d'élément d'intérêt.

Selon d'autres caractéristiques avantageuses et non limitatives :

• ledit vecteur de représentation comprend deux valeurs de position et une valeur de visibilité de l'au moins une structure géométrique caractéristique de ladite catégorie donnée d'élément d'intérêt ;

- ladite structure géométrique caractéristique est un point caractéristique ;
- ledit vecteur de représentation comprend des valeurs descriptives d'au moins trois structures géométriques caractéristiques de ladite première catégorie d'élément d'intérêt ;
- lequel la couche d'encodage est une couche de convolution avec des filtres de taille 1x1 ou une couche entièrement connectée ;
- le procédé est mis en œuvre à partir d'une pluralité de bases d'images d'apprentissage dans lesquelles lesdits éléments d'intérêt sont déjà annotés, le CNN étant commun à ladite pluralité de bases d'images d'apprentissage et présentant un tronc commun et une pluralité de couches d'encodage chacune spécifique d'une de ladite pluralité de bases d'images d'apprentissage ;
- chaque base d'images d'apprentissage est associée à un ensemble de catégories d'élément d'intérêt, les éléments d'intérêt détectés dans les images d'une base étant ceux appartenant à une catégorie dudit ensemble associé à la base, lesdits ensembles de catégories étant différents d'une base à l'autre ;
- ladite pluralité de bases d'images d'apprentissage comprend au moins une première base, une deuxième base et une troisième base, l'ensemble de catégories d'élément d'intérêt associé à la première base comprenant la catégorie visage, l'ensemble de catégories d'élément d'intérêt associé à la deuxième base comprenant la catégorie personne, et l'ensemble de catégories d'élément d'intérêt associé à la troisième base comprenant la catégorie véhicule ou au moins une sous- catégorie de la catégorie véhicule.

Selon un deuxième aspect, l'invention concerne un procédé de détection d'éléments d'intérêt visibles dans une image, par des moyens de traitement de données d'un terminal, au moyen d'un CNN appris conformément au procédé selon le premier aspect, dans lequel sont détectés les éléments d'intérêt de ladite première catégorie, ainsi que pour chaque élément d'intérêt de la première catégorie détecté, les structures géométriques caractéristiques de ladite première catégorie d'élément d'intérêt, visibles dans ladite image.

Selon des caractéristiques avantageuses et non-limitatives :

- le procédé comprend en outre la détection des éléments d'intérêt d'une deuxième catégorie différente de la première catégorie telle que la deuxième catégorie est une sous-partie de la première catégorie, et telle que les structures géométriques caractéristiques de la première catégorie d'élément d'intérêt sont également des structures géométriques caractéristiques de la deuxième catégorie d'élément d'intérêt ;
- soit la deuxième catégorie est la catégorie visage et la première catégorie est la catégorie personne, soit la deuxième catégorie est la catégorie plaque d'immatriculation et la première catégorie est la catégorie véhicule ou une sous-catégorie de la catégorie véhicule.

Selon un troisième aspect, l'invention concerne un procédé d'association d'éléments d'intérêt visibles dans une image, caractérisé en ce qu'il comprend la mise en œuvre par des moyens de traitement de données d'un équipement d'étapes de :

(a) Détection d'au moins un élément d'intérêt d'une première catégorie visible dans ladite image et d'au moins un élément d'intérêt d'une deuxième catégorie différente de la première catégorie visible dans ladite image, conformément au procédé de détection selon le deuxième aspect ;
(b) Association de chaque élément d'intérêt de la première catégorie détecté avec un élément d'intérêt de la deuxième catégorie détecté.

Selon d'autres caractéristiques avantageuses et non limitatives :

- l'étape (a) comprend en outre la détection, pour chaque élément d'intérêt de la première catégorie détecté, de la ou les structures géométriques caractéristiques de ladite première catégorie d'élément d'intérêt, visibles dans ladite image ;
- le procédé comprend une étape (b) de calcul, pour chaque paire d'un premier élément d'intérêt de la première catégorie détecté et d'un deuxième élément d'intérêt de la deuxième catégorie détecté, d'un score de recouvrement entre une boite dudit deuxième élément et la ou les structures géométriques caractéristiques de ladite première catégorie d'élément d'intérêt pour le premier élément ;
- l'étape (c) est réalisée grâce à un algorithme d'optimisation combinatoire en fonction des scores de recouvrement calculés ;
- ledit vecteur de représentation comprend des valeurs descriptives d'au moins trois points caractéristiques de ladite première catégorie d'élément d'intérêt, de sorte à détecter à l'étape (a), pour chaque élément d'intérêt de la première catégorie détecté, au moins trois structures géométriques caractéristiques de ladite première catégorie d'élément d'intérêt visibles dans ladite image ;
- ledit score de recouvrement entre une boite dudit deuxième élément et le ou les points caractéristiques de ladite première catégorie d'élément d'intérêt pour le premier élément calculé à l'étape (b) est un taux de recouvrement, en particulier le critère de Jaccard, entre ladite boite du deuxième élément et une enveloppe convexe des structures géométriques caractéristiques de ladite première catégorie d'élément d'intérêt pour le premier élément ;

• deux éléments d'intérêts associés sont considérés faisant partie d'une même entité ;

• ledit algorithme d'optimisation combinatoire est l'algorithme hongrois.

Selon un quatrième et un cinquième aspect, l'invention propose un produit programme d'ordinateur comprenant des instructions de code pour l'exécution d'un procédé selon le premier, le deuxième ou le troisième aspect d'apprentissage de paramètres d'un réseau de neurones à convolution, CNN, de détection d'éléments d'intérêt visibles dans une image ou d'association d'éléments d'intérêt visibles dans une image ; et un moyen de stockage lisible par un équipement informatique sur lequel un produit programme d'ordinateur comprend des instructions de code pour l'exécution d'un procédé selon le premier, le deuxième ou le troisième aspect d'apprentissage de paramètres d'un réseau de neurones à convolution, CNN, de détection d'éléments d'intérêt visibles dans une image ou d'association d'éléments d'intérêt visibles dans une image.

PRESENTATION DES FIGURES

D'autres caractéristiques et avantages de la présente invention apparaîtront à la lecture de la description qui va suivre d'un mode de réalisation préférentiel. Cette description sera donnée en référence aux dessins annexés dans lesquels :

- Les figures 1a et 1b représentent deux exemples d'association d'éléments d'intérêt dans des images vidéo en utilisant un procédé connu ;
- la figure 2 est un schéma d'une architecture pour la mise en œuvre des procédés selon l'invention ;
- la figure 3 illustre les étapes d'un mode de réalisation préféré d'un procédé de suivi selon l'invention ;
- la figure 4 représente un exemple d'architecture de CNN pour la mise en œuvre d'un mode de réalisation d'un procédé de détection de l'invention ;
- la figure 5 illustre schématiquement la mise en œuvre d'un procédé d'apprentissage selon un mode de réalisation préféré de l'invention ;
- la figure 6a représente un exemple de vecteur de représentation généré lors de la mise en œuvre d'un procédé d'association selon un mode de réalisation préféré de l'invention ;
- la figure 6b représente un exemple d'association d'éléments d'intérêt dans une image en utilisant un procédé d'association selon un mode de réalisation préféré de l'invention.

DESCRIPTION DETAILLEE

*Notions*

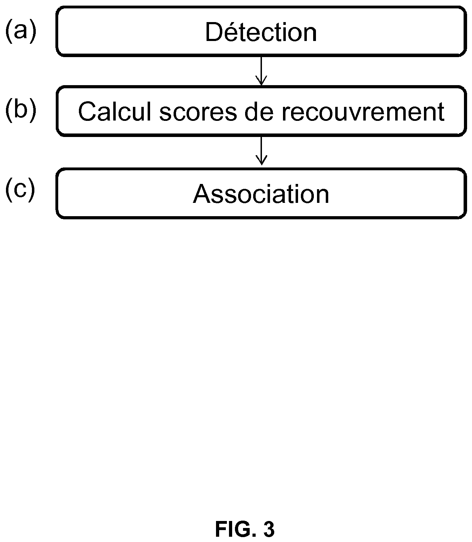

En référence à la **figure 3** qui sera décrite plus loin, selon plusieurs aspects complémentaires la présente invention peut impliquer :

- un procédé d'apprentissage d'un réseau de neurones à convolution (CNN) ;
- un procédé de détection d'éléments d'intérêt visibles dans une image ;
- un procédé d'association d'éléments d'intérêt visibles dans une image ;
- un procédé de suivi d'éléments d'intérêt visibles dans une vidéo constituée d'une séquence de *K* images (i.e. de frames).

Ici, le terme « élément d'intérêt » désigne toute représentation dans l'image/vidéo d'une entité dont on souhaite la détection/association/suivi dans une image/vidéo. Chaque élément d'intérêt est d'une catégorie donnée, correspondant à un type au sens sémantique. Par exemple, les catégories personne, visage, véhicule, plaque d'immatriculation, etc. peuvent être considérées : la catégorie véhicules recouvre l'ensemble de tous les véhicules (voiture/camion/bus...) quel que soit le modèle, la couleur, etc., la catégorie plaque d'immatriculation recouvre l'ensemble de toutes les plaques quel que soit le pays/région d'émission, la couleur, etc.

La « détection », ou « reconnaissance » est l'opération la plus basique, et désigne le simple marquage d'un élément d'intérêt d'une catégorie connue dans une image. La détection combine ainsi la localisation (détermination de la position et la taille d'une boite englobant l'élément d'intérêt, dite boite de détection) et la classification (détermination de sa catégorie).

Par « suivi », on entend comme expliqué avant le « tracking » de ces éléments d'intérêt pendant la durée de la vidéo, c'est-à-dire l'identification continue d'un même élément détecté d'image en image où il est présent de sorte à déterminer le déplacement de l'entité correspondante au cours du temps.

Pour cela, on référence chaque élément d'intérêt avec un identifiant, l'ensemble des occurrences d'un élément d'intérêt pour un identifiant donné étant appelé une « track ».

On fera la différence entre la « détection » et « l'identification » : alors que la détection se fait image par image, et ne fait pas de distinction entre les différents éléments d'une même catégorie, l'identification affecte aux détections les bons identifiants de sorte à ce que deux détections de la même entité sur deux images différentes aient le même identifiant, i.e. fasse partie de la même track. Par exemple, supposant que sur une première image soient identifiés comme « personne 1 » et « personne 2 » deux éléments de catégorie personne et que soient détectés dans une deuxième image à nouveau deux éléments de catégorie personne, l'identification permet de déterminer dans la deuxième image lequel est la personne 1/2 (voire même une personne 3)

L'identification peut en d'autres termes être vue comme la mise en correspondance d'un élément détecté avec une entité, c'est-à-dire la distinction entre les différents éléments de la même catégorie détectables dans une ou plusieurs images.

On comprend que dans un tracking « parfait » une entité devrait être identifiée de façon unique et constante par un même élément d'intérêt, i.e. il devrait y avoir une correspondance exacte entre élément d'intérêt et entité, mais en pratique une entité peut être associée au cours du temps à plusieurs éléments d'intérêts (constituant des doublons), voire un élément d'intérêt peut changer d'entité (confusion de deux entités), voir plus loin. Il s'agit d'inexactitudes dans le tracking que le présent procédé permet efficacement de résoudre.

Par « association », on entend la mise en correspondance de deux éléments d'intérêt de catégories différentes mais liés.

Un premier élément d'intérêt d'une première catégorie et un deuxième élément d'intérêt d'une deuxième catégorie peuvent être associés s'ils présentent un lien, notamment s'ils font partie d'une même entité. En général, deux éléments d'intérêts de catégories différentes associés sont référencés par un même identifiant, i.e. il y a un identifiant unique par entité, comme c'est le cas dans les exemples des figures 1a, 1b.

Dans la suite de la description, on considèrera le mode de réalisation préféré d'une association de nature « sous-partie ». En d'autres termes, l'un du premier et de la deuxième catégorie d'élément d'intérêt est une sous-partie de l'autre, i.e. en fait partie. Arbitrairement, la présente description considère la deuxième catégorie comme étant une sous-partie de la première catégorie, mais l'inverse pourra naturellement être considéré. Selon un exemple, la deuxième catégorie est la catégorie visage et la première catégorie est la catégorie personne. Selon un autre exemple, la deuxième catégorie est la catégorie plaque d'immatriculation et la première catégorie est la catégorie véhicule.

A noter que l'invention ne sera pas limitée à une association de nature sous-partie, et on pourra par exemple considérer une association de deux catégories elles-mêmes sous-partie d'une troisième catégorie (par exemple une association visage-main).

On peut même envisager des cas d'association où il n'y a aucune relation partie/sous-partie que ce soit directement ou indirectement, par exemple personne et bagage.

Dans un cas où il y a plus de deux catégories d'élément d'intérêt qui peuvent être associées (par exemple, personne/visage/main), en particulier une première catégorie, une deuxième catégorie et une troisième catégorie, il suffit de définir une catégorie principal (la « partie ») et des catégories secondaires (les « sous-parties »), et on associera chaque catégorie secondaire à la catégorie principale. Par exemple, s'il y a personne/visage/main, chaque main sera associée à une personne et chaque visage sera associé à une personne, mais on ne tentera pas d'associer les mains et les visages (dans la mesure où cette association est connue par transitivité à partir des deux autres).

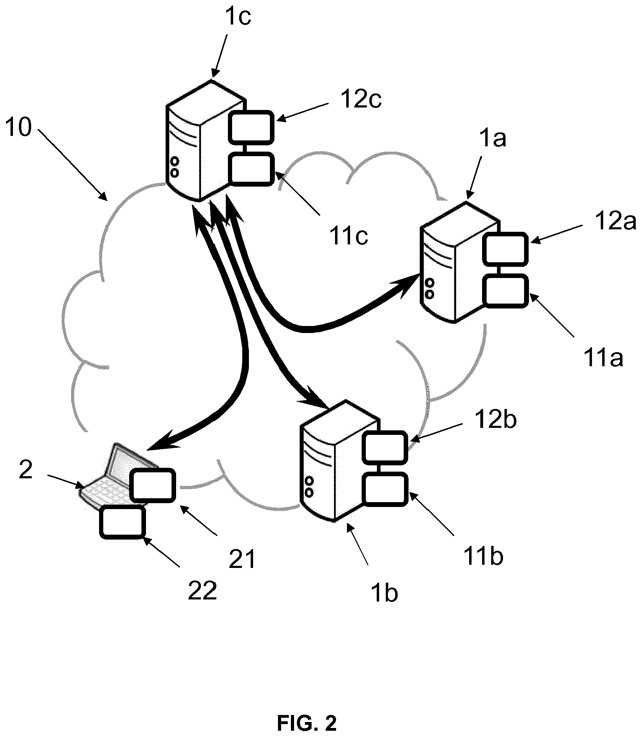

Les présents procédés sont mis en œuvre au sein d'une architecture telle que représentée par la **figure 2,** grâce à un ou plusieurs serveurs 1a, 1b, 1c et un terminal 2. Comme l'on verra, le procédé peut comprendre l'apprentissage d'un ou plusieurs réseaux de neurones à convolution, CNN, et le cas échéant le ou les serveurs 1a, 1b, 1c sont des équipements d'apprentissage associés. Le terminal 2 est quant à lui un équipement d'utilisation à proprement parler c'est-à-dire mettant en œuvre tout ou partie du présent procédé), par exemple un équipement de traitement de données de vidéo-surveillance.

Dans tous les cas, chaque équipement 1a, 1b, 1c, 2 est typiquement un équipement informatique distant relié à un réseau étendu 10 tel que le réseau internet pour l'échange des données. Chacun comprend des moyens de traitement de données 11a, 11b, 11c, 21 de type processeur, et des moyens de stockage de données 12a, 12b, 12c, 22 telle qu'une mémoire informatique, par exemple un disque.

Au moins un des éventuels serveurs 1a, 1b, 1c stocke une base de données d'apprentissage, i.e. un ensemble d'images d'apprentissage, c'est-à-dire sur lesquelles des éléments d'intérêt ont été déjà annotés avec la catégorie d'élément correspondante (par opposition à la vidéo dite d'entrée sur laquelle on cherche à faire le tracking). De façon préférée, on a au moins deux, voire au moins trois, bases d'images d'apprentissage, stockées sur autant de serveurs distincts (exemple de deux serveurs 1a et 1b dans la figure 2).

Dans la figure 2, le serveur 1c est un serveur optionnel qui ne dispose quant à lui pas de base d'images d'apprentissage et qui met en œuvre l'obtention du ou des CNN à partir des bases de données des serveurs 1a, 1b. Le rôle de ce serveur 1c peut cependant tout à fait être accompli par l'un ou l'autre des serveurs 1a, 1b.

*CNN*

Un CNN contient généralement quatre types de couches traitant successivement l'information :

- la couche de convolution qui traite des blocs de l'entrée les uns après les autres ;
- la couche non linéaire qui permet d'ajouter de la non linéarité au réseau et donc d'avoir des fonctions de décision beaucoup plus complexes ;
- la couche de mise en commun (appelée « pooling ») qui permet de regrouper plusieurs neurones en un seul neurone ;
- la couche entièrement connectée qui relie tous les neurones d'une couche à tous les neurones de la couche précédente.

La fonction d'activation de couche non linéaire *NL* est typiquement la fonction *ReLU* (Rectified Linear Unit, i.e. Unité de Rectification Linéaire) qui est égale à $f(x) = max(0, x)$ et la couche de pooling (notée *POOL*) la plus utilisée est la fonction *MaxPool2×2* qui correspond à un maximum entre quatre valeurs d'un carré (on met en commun quatre valeurs en une seule).

La couche de convolution, notée *CONV*, et la couche entièrement connectée, notée *FC*, correspondent généralement à un produit scalaire entre les neurones de la couche précédente et les poids du CNN.

Les architectures typiques de CNN empilent quelques paires de couches *CONV → NL* puis ajoutent une couche *POOL* et répètent ce schéma *[(CONV → NL)$^p$ → POOL]* jusqu'à obtenir un vecteur de sortie de taille suffisamment petite, puis terminent par une ou deux couches entièrement connectées *FC*.

En analyse d'image, il n'y a pas toujours de couches non-linéaires *NL* ni même de couches entièrement connectées *FC*.

L'homme du métier pourra par exemple se référer aux CNN décrits dans les documents YOLO9000: Better, Faster, Stronger - Joseph Redmon, Ali Farhadi, https://arxiv.org/abs/1612.08242, Faster R-CNN: Towards Real-Time Object Detection with Region Proposai Networks, https://arxiv.org/abs/1506.01497, ou leurs dérivés.

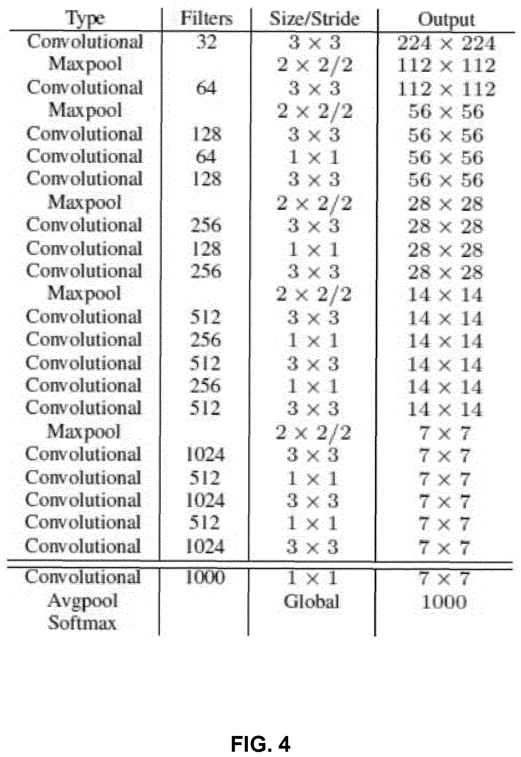

Dans la suite de la présente description, on prendra en particulier un exemple de CNN basé sur l'architecture « Darknet-19 » représentée dans la **figure 4** et décrite dans le document *YOLO9000*, qui comprend 19 couches de convolution *CONV,* 5 couches de pooling *MaxPool2x2* (Alternativement, on pourra également citer la version « Darknet-53 », à 53 couches de convolution *CONV,* ou n'importe quelle architecture de type *VGG, RESNET, DENSNET,* etc.).

En reprenant l'exemple de Darknet-19, on pourra construire un CNN de détection en prenant son tronc commun (i.e. la partie s'étendant jusqu'au double trait horizontal dans la figure 4) et en y ajoutant éventuellement trois couches de convolution présentant 1024 filtres de taille $3×3$, et surtout une dernière couche de convolution CONV présentant avantageusement des filtres de taille 1x1, qui agit comme couche dite « d'encodage » et présente une sortie de taille C (i.e. présente un nombre de filtres égale à la taille souhaitée du vecteur de représentation en sortie, voir plus loin). Alternativement, une couche entièrement connectée FC peut être utilisée comme couche d'encodage.

En effet, l'objectif d'une méthode à base de CNN est de décrire le plus précisément possible et de façon répétable le contenu d'une image sous forme d'un vecteur contenant toutes les informations des éléments à détecter, c'est ce que permet la couche d'encodage. Ainsi, la couche d'encodage génère un vecteur de représentation des éléments d'intérêt détectés.

L'image est découpée spatialement en S cellules (par exemple des cellules de 7x7), chaque cellule dispose de *B* 'boites de description' (typiquement, *B=2* ou 3), qui indiquent la présence d'un ou plusieurs éléments d'intérêt (jusqu'à *B* éléments) dans cette cellule, et constituent ainsi des boites de détection « candidates ». La bonne boite de détection est celle qui englobe au mieux (c'est-à-dire au plus près) l'élément d'intérêt correspondant.

La présence d'une entité dans une boite de description se traduit à minima par la donnée de sa position dans la cellule et de sa catégorie, codée sous la forme du vecteur dit « de représentation » de C valeurs généré par la couche d'encodage. Généralement, le vecteur comprend au moins cinq valeurs :

- Coordonnées *x*/*y* du centre de la boite de description (en fraction de la taille de la cellule) ;
- Longueur/largeur *w*/*h* de la boite de description (en fraction de la taille de la cellule) ;
- Identifiant *c* de la catégorie de l'élément d'intérêt

Le code total de description d'une image est la concaténation de tous les vecteurs de représentation des boites de description, soit de longueur *S\*B\*C.*

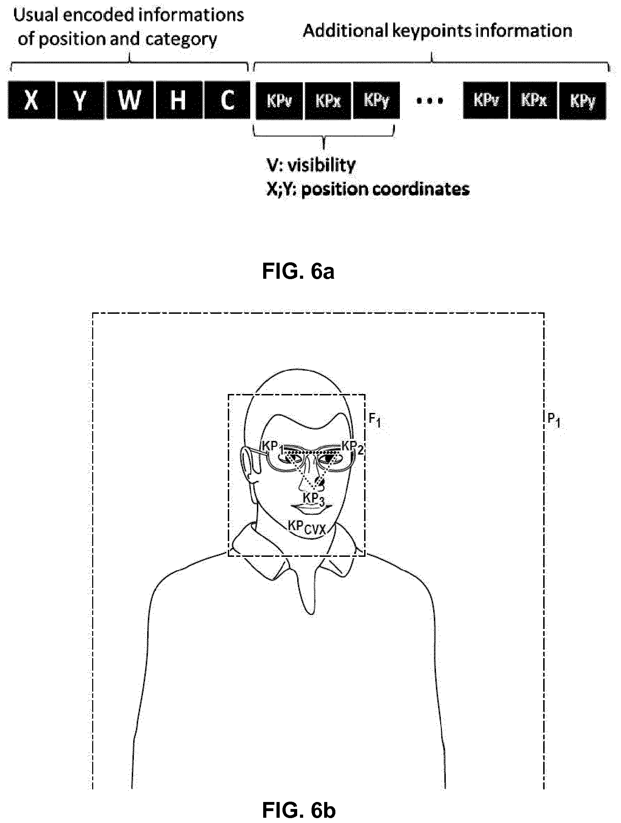

En référence à la **figure 6a,** au moins certains vecteurs de représentation (ceux pour un élément d'intérêt d'une catégorie donnée, par exemple les personnes) sont allongés, i.e. se voient concaténer des valeurs descriptives d'au moins une structure géométrique caractéristique de ladite catégorie, en particulier lesdites valeurs descriptives comprennent avantageusement au moins deux valeurs de position (coordonnées *KPx*/*KPy*) et/ou une valeur de visibilité (valeur booléenne *KPv*). De façon particulièrement préférée, il y a au moins trois structures géométriques caractéristiques, c'est-à-dire au moins neuf valeurs descriptives additionnelles, comme l'on verra plus loin.

Ainsi, la détection des points caractéristiques est accomplie de façon simultanée avec la détection des éléments d'intérêt, sans surcout de temps et sans dégradation des performances.

Par « structure géométrique caractéristique », on entend tout particulièrement un point caractéristique (en anglais « keypoint »), mais également une forme telle qu'un polygone, un maillage, etc. et de façon générale tout objet graphique facilement repérable sur tous les éléments de cette catégorie. De façon particulièrement préférée, lorsque l'un de la première catégorie et de la deuxième catégorie est une sous-partie de l'autre, on choisit des structures géométriques caractéristiques communes à la première catégorie et à la deuxième catégorie. Dans l'exemple visage/personne, on pourra ainsi par exemple prendre les deux yeux et le nez : en effet, il s'agit de structures géométriques d'une forme très particulière, caractéristiques aussi bien d'une personne que d'un visage.

L'utilisation de ces structures géométriques caractéristiques « communes » permet très astucieusement de réaliser comme on va le voir plus tard l'association d'éléments de deux catégories dans l'image, et ce de façon très fiable.

Dans la suite de la description, on prendra l'exemple dans lequel lesdites structures géométriques sont des points, et par exemple on annotera les yeux ou le nez d'un visage comme des points.

Avantageusement on peut encoder d'autres informations sur ce code sur le vecteur de représentation (d'autres boites englobantes, une information sur l'action en cours, un numéro de plaque immatriculation d'un véhicule, etc.)

*Procédé d'apprentissage*

Selon un premier aspect, l'invention concerne un procédé d'apprentissage de paramètres d'au moins un réseau de neurones à convolution, CNN, pour détection d'éléments visibles dans des images, à partir d'au moins une base d'images d'apprentissage dans lesquels lesdits éléments sont déjà annotés, i.e. localisés et classifiés (la catégorie est déterminé). Chaque base d'images est en effet avantageusement associée à un ensemble de catégories d'élément d'intérêt, les éléments d'intérêt annotés dans les images d'une base étant ceux appartenant à une catégorie dudit ensemble de catégories associé à la base. On cherche en particulier à détecter les éléments d'intérêts d'au moins deux catégories, dont une première catégorie et une deuxième catégorie.

Comme expliqué avant, pour les éléments d'au moins une catégorie donnée peuvent être déjà annotés une ou plusieurs structures géométriques caractéristiques, i.e. leurs coordonnées dans l'image connues. On comprend que les structures géométriques caractéristiques ne sont pas toujours visibles et donc ne sont renseignés que s'ils sont visibles. Par exemple une personne de profil peut être détectée en tant qu'élément de catégorie personne (son visage aussi), mais son œil gauche ou droit ne sera pas visible car derrière la tête.

Les structures géométriques caractéristiques annotées sont avantageusement celles d'au moins une catégorie donnée (la première catégorie).

Comme expliqué avant, l'au moins un CNN comprend alors une couche d'encodage pour la génération d'un vecteur de représentation des éléments d'intérêt à détecter comprenant pour au moins ladite première catégorie d'élément d'intérêt à détecter, au moins une (avantageusement trois, en particulier cordonnées et visibilité) valeur descriptive d'au moins une (avantageusement trois) structure géométrique caractéristique (en particulier point caractéristique) de ladite première catégorie d'élément d'intérêt. On comprendra à nouveau que toutes les structures géométriques caractéristiques ne sont pas forcément visibles et que naturellement seuls celles qui le sont peuvent être détectées. Ainsi, même si l'on tente de détecter trois points caractéristiques, on n'y arrivera pas forcément pour les trois (mais on indiquera alors le ou lesquels ne sont pas visibles).

Selon un premier mode classique, chaque CNN est appris à partir d'une unique base d'apprentissage, pour un sous-ensemble de l'ensemble des catégories associé à cette base (voire une seule catégorie, et en particulier la première ou la deuxième catégorie). En d'autres termes, il apprend à reconnaître une ou plusieurs des catégories d'éléments déjà annotés dans les images d'apprentissage de cette base.

Il n'est pas possible de fusionner deux bases de données d'apprentissage car celles-ci sont « partiellement » annotées l'une par rapport à l'autre. Par exemple si l'on considère une base de personnes et une base de véhicules, les véhicules ne sont pas annotés dans la base de personnes et vice-versa, ce qui constitue des faux négatifs qui perturberaient complètement l'apprentissage. Il faudrait manuellement ajouter les annotations manquantes, ce qui est un travail titanesque. On citera par exemple la base MS-COCO (la plus utilisée) qui contient seulement des annotations de personnes, de quelques animaux et de quelques objets, mais pas d'annotation de visages. On citera également par exemple la base de données WIDER, qui contient uniquement des annotations de visage.

De surcroit, si l'une de la première et de la deuxième catégorie d'élément d'intérêt est une sous-partie de l'autre, même en créant une base ad hoc il ne serait pas possible d'apprendre simultanément à un CNN à détecter les deux catégories du fait de leur inclusion.

Ainsi, si on est dans un cas où la première catégorie est dans l'ensemble de catégories d'une première base et la deuxième catégorie est dans l'ensemble de catégories d'une deuxième base, on apprend deux CNN qui constituent deux « détecteurs » indépendants.

Par exemple on peut apprendre d'un côté un détecteur d'éléments de catégorie personne à partir d'une première base associée à un ensemble de catégories d'élément d'intérêt comprenant la catégorie personne et ayant les structures géométriques caractéristiques de la catégorie personne annotées (typiquement directement par les moyens de traitement 11a du premier serveur 1a si c'est celui qui stocke la première base), et de l'autre côté un détecteur d'éléments de catégorie visage à partir d'une deuxième base associée à un ensemble de catégories d'élément d'intérêt comprenant la catégorie visage, cette fois sans structures géométriques caractéristiques (typiquement directement par les moyens de traitement 11b du deuxième serveur 1b si c'est celui qui stocke la deuxième base).

A noter que limiter le nombre de catégories différents détectables par un CNN réduit d'autant la taille nécessaire du vecteur de représentation en sortie.

Selon un deuxième mode de réalisation préféré, on contourne le problème de l'incompatibilité des différentes bases en permettant d'avoir au moins un CNN commun appris directement à partir d'une pluralité de bases d'images d'apprentissage, et ce en un seul apprentissage. Cela est avantageusement réalisé par les moyens de traitement de données 11c du serveur 1c connecté aux autres serveurs 1a, 1b des bases de données. Ledit CNN est dit « commun » à plusieurs bases de données (en d'autres termes on a un seul CNN qui apprend à la fois sur plusieurs bases de données), par opposition aux CNN classiques qui ne peuvent apprendre chacun que sur une base.

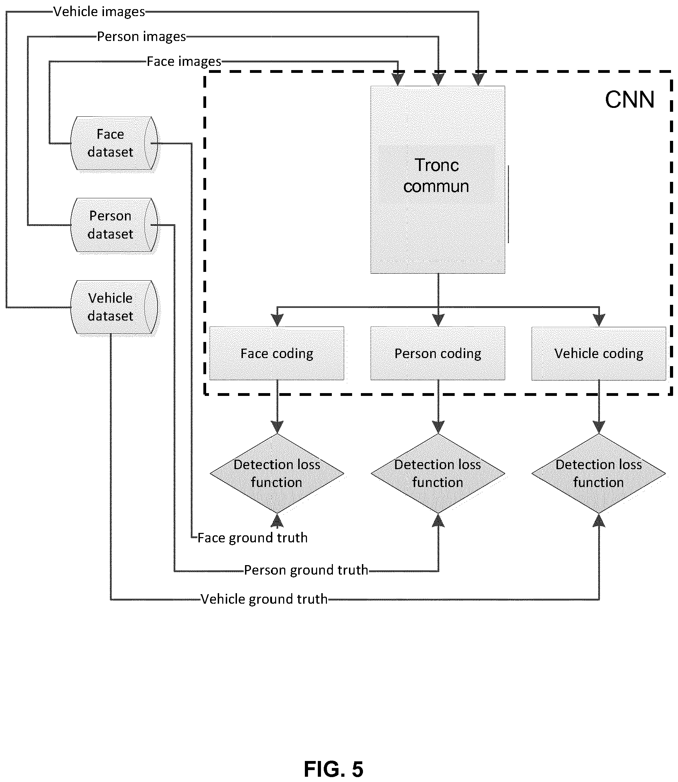

En référence à la **figure 5**, ladite pluralité de bases d'images d'apprentissage comprend avantageusement au moins une première base d'images d'apprentissage (dans lesquelles au moins les éléments d'intérêt de la première catégorie, ainsi que pour chaque élément d'intérêt de la première catégorie les structures géométriques caractéristiques de la première catégorie, sont déjà annotés) et une deuxième base (dans lesquelles au moins les éléments d'intérêt de la deuxième catégorie sont déjà annotés), voire une troisième base.

En particulier, l'ensemble de catégories d'élément d'intérêt associé à la première base comprend la catégorie personne (la première catégorie dans les exemples), l'ensemble de catégories d'élément d'intérêt associé à la deuxième base comprend la catégorie visage (la deuxième catégorie), et l'ensemble de catégories d'élément d'intérêt associé à l'éventuelle troisième base comprend une ou plusieurs catégories d'objets inanimés, comme le catégorie véhicule ou au moins une sous-catégorie de véhicule (par exemple, les sept catégories voiture, camion, bus, deux roue, bicyclette, avion et bateau). On comprend cependant que l'on n'est limité à aucun choix de bases/catégories.

Pour cela, on utilise comme CNN commun un CNN présentant un tronc commun et une pluralité de couches d'encodage chacune spécifique d'une de ladite pluralité de bases d'images d'apprentissage.

En d'autres termes, comme l'on voit dans la figure 5, l'architecture du CNN présente non pas une couche d'encodage commune à l'ensemble des modalités (c'est-à-dire les différents ensembles de catégories), mais une couche d'encodage spécifique à certaines des modalités.

De façon particulièrement préférée, ledit tronc commun comprend toutes les couches présentant des paramètres variables autres que la couche d'encodage, et en particulier début le début. Dans l'exemple de la figure 4, le tronc commun s'étend jusqu'au double trait horizontal.

En d'autres termes, en supposant qu'on a trois bases d'images d'apprentissage comme dans l'exemple de la figure 5, alors on a trois couches d'encodage et pour chaque image d'apprentissage prise en entrée on utilise la couche d'encodage correspondant à la base dont vient l'image d'apprentissage.

On comprend donc que toutes les images d'apprentissage participent à l'apprentissage du tronc commune, mais que seules les images d'une base participent à l'apprentissage de chaque couche d'encodage.

Les diverses couches d'encodage sont comme expliqué composées chacune avantageusement d'une couche de convolution avec des filtres préférentiellement de taille 1x1, et dont la taille de sortie $C$ (le nombre de filtres) correspond à la taille du vecteur de représentation (typiquement 8 pour les personnes et les visages, et 14 pour les véhicules s'il y a 7 sous-catégories comme dans l'exemple ci-dessus, plus lesdites valeurs descriptives d'au moins une structure géométrique caractéristique pour au moins l'une d'entre elles). Les diverses couches d'encodage sont typiquement disposées en parallèle.

En complément, on utilise avantageusement comme représenté sur la figure 5 une pluralité de fonctions de coût à nouveau chacune spécifique d'une de ladite pluralité de bases d'images d'apprentissage.

On rappelle qu'une fonction de coût (dite de « loss », c'est-à-dire de perte) spécifie comment l'apprentissage du CNN pénalise l'écart entre le signal prévu et réel. Plus précisément, pour une donnée d'entrée (image d'apprentissage), la fonction de coût permet de quantifier une « erreur » entre la sortie obtenue par le CNN (les éléments détectés) et la sortie théorique (les éléments annotés). L'apprentissage vise à modifier les paramètres du CNN de sorte à diminuer graduellement l'erreur telle que calculée par la fonction de coût. On connait par exemple la fonction *Softmax* (ou fonction exponentielle normalisée), ou encore la fonction de Huber, des normes comme la norme L1, etc.

Pour réaliser l'apprentissage à proprement parler, la technique classique dite de rétropropagation du gradient propage « vers l'arrière » l'erreur calculée de sorte à mettre à jour les paramètres de toutes les couches.

Dans le présent mode de réalisation, on utilise pour ce faire des fonctions de coût différentes selon la base d'où vient chaque image d'apprentissage. Plus précisément, on tire aléatoirement de façon itérative des images d'apprentissage dans la pluralité de base (i.e. chaque image peut être issue de n'importe quelle base), et on fait varier pour chacune les poids et paramètre du CNN sur la base de la fonction de coût correspondant à la base dont elle provient.

De façon particulièrement préférée, on met en œuvre un paradigme d'apprentissage dit en « batch », c'est-à-dire que pour un ensemble d'images d'apprentissage issues indifféremment des diverses bases l'on calcule d'abord les erreurs (avec la fonction de coût correspondante) sans mettre à jour les paramètres, puis on additionne ces différentes erreurs, et lorsque l'ensemble des images dudit ensemble est passé une fois dans le CNN, on applique la rétropropagation dans tout le CNN en utilisant l'erreur totale (sommée).

Le CNN commun pourra être utilisé comme détecteur « multi-catégories » lorsqu'appliqué aux images de la vidéo. Naturellement il est déjà possible de faire des détecteurs multi-catégories à partir d'une seule base de données si celle-ci a déjà les éléments de plusieurs catégories annotés, mais on est limité à ces catégories. Le CNN commun du présent mode de réalisation permet de combiner n'importe quelles bases de données d'apprentissage, et donc d'être multi-catégories de façon complètement libre.

On comprend que le fait de multiplier les couches d'encodage et les fonctions de coût permet, sans augmenter sensiblement la taille du réseau, de ne pas avoir une détection pénalisée par une autre et d'avoir la même efficacité qu'avec une pluralité de détecteurs. De plus on a un gain de temps significatif dans l'apprentissage puisque celui-ci peut être simultané pour toutes les bases.

A noter qu'il reste tout à fait possible, si l'on souhaite détecter un nombre élevé de catégories différents, d'apprendre d'autres CNN, qu'ils soient chacun commun à plusieurs bases de données ou spécifique à une base de données. Par exemple ou pourrait avoir un premier CNN commun détecteur multi-catégories, et un deuxième CNN détecteur dédié à une autre catégorie complexe à identifier apprise par conséquent sur une base de données particulière.

*Détection*

Selon un deuxième aspect est proposé un procédé de détection d'éléments d'intérêt visibles dans une image (d'entrée, par opposition aux images d'apprentissage), par les moyens de traitement de données 21 du terminal 2, au moyen d'un CNN appris conformément au procédé selon le premier aspect.

Ce procédé de détection comprend deux étapes : dans une première étape est mis en œuvre l'apprentissage d'un CNN tel que défini précédemment, et dans une deuxième étape les moyens de traitement de données 21 du terminal 2 traitent ladite image, au moyen de ce CNN, de sorte à détecter le ou les éléments d'intérêt qui y sont visibles.

Sont au moins détectés les éléments d'intérêt de ladite première catégorie, ainsi que pour chaque élément d'intérêt de la première catégorie détecté les structures géométriques caractéristiques de ladite première catégorie d'élément d'intérêt, visibles dans ladite image, et préférentiellement les éléments d'intérêt de ladite deuxième catégorie.

Ce procédé est mis en œuvre de façon classique, on comprend juste comme expliqué que la détection inclut celle des structures géométriques caractéristiques grâce au vecteur de représentation allongé.

*Association*

Selon un troisième aspect est proposé un procédé d'association d'éléments d'intérêt visibles dans une image, mis en œuvre par les moyens de traitement de données 21 du terminal 2.

En référence à la figure 3, dans une première étape (a) est mise en œuvre la détection d'au moins un élément d'intérêt d'une première catégorie et d'au moins un élément d'intérêt d'une deuxième catégorie différente de la première catégorie visibles dans ladite image, conformément au procédé de détection selon le deuxième aspect.

Dans une étape (c) (on verra plus loin qu'une étape (b) optionnelle peut avoir lieu avant), chaque élément d'intérêt de la première catégorie détecté dans ladite image est associé avec un élément d'intérêt de la deuxième catégorie détecté dans ladite image.

On rappelle que deux éléments associés sont considérés comme étant liés à, et en particulier faisant partie de, la même entité, comme expliqué précédemment.

On notera qu'il est toujours possible qu'il reste un élément du premier ou de la deuxième catégorie « orphelin » s'il n'y pas le même nombre d'éléments du premier et de la deuxième catégorie ayant été détectés, i.e. si par exemple celui avec lequel un élément aurait dû être associé est masqué ou que la détection n'a pas fonctionné. Par exemple, dans la figure 1a, le bébé n'est pas détecté (seul son visage l'est) et on a donc un visage orphelin.

Chaque élément d'intérêt est avantageusement référencé avec un identifiant, et de façon préférée l'association de deux éléments se traduit en associant au second l'identifiant du premier (i.e. les deux sont référencés sous le même identifiant).

L'étape (c) peut être mise en œuvre de façon classique (typiquement par détection d'inclusion d'un deuxième élément dans le premier élément), mais de façon particulièrement préférée, on utilisera un procédé innovant d'association d'éléments d'intérêt dans une image, impliquant le CNN à vecteur de représentation allongé décrit ci-avant.

Dans ce mode de réalisation, dans l'étape (a) est détecté comme expliqué au moins un élément d'intérêt d'une première catégorie, au moins un élément d'intérêt d'une deuxième catégorie différent du premier, ainsi que pour chaque élément d'intérêt de la première catégorie détecté la ou les structures géométriques caractéristiques de ladite première catégorie d'élément d'intérêt (i.e. la ou les structures géométriques caractéristiques associées à chaque élément de la première catégorie), visibles dans ladite image.

Ceux-ci sont choisis tels que la deuxième catégorie est une sous-partie de la première catégorie, et que les structures géométriques caractéristiques de la première catégorie d'élément d'intérêt sont également des structures géométriques caractéristiques de la deuxième catégorie d'élément d'intérêt. Comme déjà expliqué, cela est par exemple le cas des points du visage tels que le nez et les yeux.

Alors, dans une étape (b), pour chaque paire d'un premier élément d'intérêt de la première catégorie détecté et d'un deuxième élément d'intérêt de la deuxième catégorie détecté, est calculé un score de recouvrement entre une boite dudit deuxième élément et la ou les structures géométriques caractéristiques de ladite première catégorie d'élément d'intérêt pour le premier élément.

L'idée astucieuse est de ne pas comparer directement les éléments de la première catégorie et les éléments de la deuxième catégorie, mais partant du principe que la deuxième catégorie est une sous-partie de la première catégorie et que les structures géométriques caractéristiques de la première catégorie d'élément d'intérêt sont également des structures géométriques caractéristiques de la deuxième catégorie d'élément d'intérêt, de comparer directement les structures géométriques caractéristiques de la première catégorie avec les éléments de la deuxième catégorie : les structures géométriques caractéristiques peuvent être vues comme une « deuxième détection » d'un élément de la deuxième catégorie, qu'il est facile de mettre en correspondance avec celui-ci.

Par « score de recouvrement », on entend toute métrique représentative de la correspondance entre une boite et des structures géométriques caractéristiques, i.e. croissante lorsque les structures géométriques caractéristiques sont de plus en plus incluses dans la boite.

Selon un premier mode de réalisation, le score de recouvrement d'une paire d'un premier élément avec un deuxième élément peut être simplement égal au nombre de structures géométriques caractéristiques pour le premier élément qui sont incluses dans la boite du deuxième élément (éventuellement normalisé en divisant par le nombre total de structures géométriques caractéristiques). Par exemple, dans l'exemple de la figure 1b, on a un score de recouvrement de 1/3 avec chacun des visages de la mère et de l'enfant puisque chacune des boites correspondantes inclut un point caractéristique de la mère (en l'espèce le nez ou l'œil gauche, l'œil droit n'étant pas visible).

Selon un deuxième mode, en particulier si trois structures géométriques caractéristiques, et notamment des points caractéristiques, sont détectés, le score est un taux de recouvrement entre ladite boite du deuxième élément et une enveloppe convexe des structures géométriques caractéristiques de ladite première catégorie d'élément d'intérêt pour le premier élément, c'est-à-dire un rapport basé sur les surfaces correspondantes. On voit dans la **figure 6b** ladite enveloppe convexe de trois points caractéristiques de ladite première catégorie d'élément d'intérêt pour le premier élément dans un exemple d'image.

On pourra utiliser de façon très avantageuse le critère de Jaccard, c'est-à-dire le rapport entre l'intersection (de la boite et de l'enveloppe convexe) et l'union (de la boite et de l'enveloppe convexe), appelé aussi en anglais « Intersection Over Union » (IOU).

Par exemple, en notant $KP_{icvx}$ l'enveloppe convexe des structures géométriques caractéristiques pour le *i-ième* élément d'intérêt de la première catégorie et $F_j$ le *j-ième* élément d'intérêt de la deuxième catégorie, alors le score de recouvrement est donné par la formule

$$scIOU_{ij} = \frac{F_j \cap KP_{icvx}}{F_j \cup KP_{icvx}}.$$

Enfin, dans l'étape (c) est mis en œuvre d'un algorithme d'optimisation combinatoire en fonction des scores de recouvrement calculés de sorte à associer chaque élément d'intérêt de la première catégorie détecté avec un élément d'intérêt de la deuxième catégorie détecté.

Par algorithme d'optimisation combinatoire, (on dit aussi d'optimisation discrète), on entend un algorithme capable de trouver une solution globale au problème d'association, i.e. de trouver la combinaison de paires optimale parmi toutes les combinaisons possibles de paires, optimale étant entendu en termes de « cout total » : on pourra se baser par exemple sur un coût par exemple $1 - scIOU_{ij}$ (et de façon générale toute fonction décroissante : plus le score de recouvrement est élevé, plus le coût d'association est faible).

De nombreux algorithmes d'optimisation combinatoire sont connus, et de façon préférée on utilisera l'algorithme hongrois qui est particulièrement adapté au cas d'espèce (alternativement, on pourra citer par exemple l'algorithme de Ford-Fulkerson).

A noter qu'on pourra toujours utiliser un algorithme d'optimisation « naïf » dans lequel on se contente d'associer à chaque élément de la première catégorie l'élément de la deuxième catégorie avec lequel le score de recouvrement est maximal, bien que des boites très proches (cas typique des visages) ainsi que des imprécisions sur la détection des structures géométriques caractéristiques peuvent entrainer des erreurs d'association.

*Suivi*

Le présent procédé d'association peut être utilisé dans un procédé de suivi d'éléments d'intérêt visibles dans une vidéo constituée d'une séquence de *K* images.

Plus précisément, chaque élément d'intérêt d'une première catégorie visible dans une *k-ième* image de ladite vidéo (frame) peut être associé avec un élément d'intérêt d'une deuxième catégorie différente de la première catégorie visible dans la *k-ième* image, conformément au procédé d'association selon le troisième aspect.

Le présent procédé peut être mis en œuvre de façon traditionnelle, en se basant sur les associations pour réaliser le suivi, mais comme expliqué le suivi peut être faussé si une mauvaise association survient.

Ainsi, selon un mode de réalisation particulièrement préféré, le présent procédé met en œuvre une correction des associations frame par frame telle que décrite dans la demande FR1859158. En effet, si une association pour une image prise isolément peut être optimale, celle-ci est peut-être incohérente avec les images précédentes. Plus précisément, on suppose une association obtenue grâce au procédé selon le troisième aspect, et cette association va être étudiée. De façon préférée, le procédé est répété itérativement pour chaque image $k \in [\![ 1 ; K ]\!]$ de la vidéo de sorte à réaliser le suivi en continu, même si on comprendra qu'il peut être mis en œuvre seulement de temps en temps pour corriger les associations. On prendra l'exemple de l'enchaînement des images $k$ et $k+1$, mais on pourra naturellement transposer à tout couple d'images successives.

*Produit programme d'ordinateur*

Selon un quatrième et un cinquième aspects, l'invention concerne un produit programme d'ordinateur comprenant des instructions de code pour l'exécution (en particulier sur les moyens de traitement de données 11a, 11b, 11c, 21 d'un ou plusieurs serveurs 1a, 1b, 1c ou du terminal 2) d'un procédé selon le premier aspect de l'invention d'apprentissage de paramètres d'un CNN, un procédé selon le deuxième aspect de l'invention de détection d'éléments d'intérêt visibles dans une image ou un procédé selon le troisième aspect d'association d'éléments d'intérêt visibles dans une image ; ainsi que des moyens de stockage lisibles par un équipement informatique (une mémoire 12a, 12b, 12c, 22 d'un ou plusieurs serveurs 1a, 1b, 1c ou du terminal 2) sur lequel on trouve ce produit programme d'ordinateur.

**Revendications**

1. Procédé d'apprentissage de paramètres d'un réseau de neurones à convolution, CNN, par des moyens de traitement de données (11a, 11b, 11c) d'au moins un serveur (1a, 1b, 1c), pour détection d'éléments d'intérêt d'au moins une première catégorie d'éléments d'intérêts, visibles dans des images, à partir d'au moins une base d'images d'apprentissage dans lesquelles lesdits éléments d'intérêt de ladite première catégorie d'éléments d'intérêts sont déjà annotées, le CNN comprenant au moins une couche d'encodage pour la génération d'un vecteur de représentation des éléments d'intérêt détectés, le procédé étant **caractérisé en ce que** au moins une structure géométrique caractéristique de ladite première catégorie d'éléments d'intérêt est également annotée dans les images de ladite base, ledit vecteur de représentation comprenant, pour au moins ladite première catégorie d'élément d'intérêt à détecter, au moins une valeur descriptive de ladite structure géométrique caractéristique de ladite première catégorie d'élément d'intérêt.

2. Procédé selon la revendication 1, dans lequel ledit vecteur de représentation comprend deux valeurs de position et une valeur de visibilité de l'au moins une structure géométrique caractéristique de ladite première catégorie donnée d'élément d'intérêt.

3. Procédé selon l'une des revendications 1 et 2, dans lequel ladite structure géométrique caractéristique est un point caractéristique.

4. Procédé selon l'un des revendications 1 à 3, dans lequel ledit vecteur de représentation comprend des valeurs descriptives d'au moins trois structures géométriques caractéristiques de ladite première catégorie d'élément d'intérêt.

5. Procédé selon l'une des revendications 1 à 4, dans lequel la couche d'encodage est une couche de convolution ou une couche entièrement connectée.

6. Procédé selon l'une des revendications 1 à 5, mis en œuvre à partir d'une pluralité de bases d'images d'apprentissage dans lesquelles lesdits éléments d'intérêt sont déjà annotés, le CNN présentant un tronc commun et une pluralité de couches d'encodage chacune spécifique d'une de ladite pluralité de bases d'images d'apprentissage.

7. Procédé selon l'une des revendications 1 à 6, dans lequel ledit CNN est également pour détection d'éléments d'intérêt d'une deuxième catégorie d'éléments d'intérêts différente de la première catégorie telle que la deuxième catégorie est une sous-partie de la première catégorie, ladite structure géométrique caractéristique de la première catégorie d'élément d'intérêt étant également une structure géométrique caractéristique de la deuxième catégorie d'élément d'intérêt.

8. Procédé selon la revendication 7, dans lequel soit la deuxième catégorie est la catégorie visage et la première catégorie est la catégorie personne, soit la deuxième catégorie est la catégorie plaque d'immatriculation et la première catégorie est la catégorie véhicule ou une sous-catégorie de la catégorie véhicule.

9. Procédé de détection d'éléments d'intérêt visibles dans une image, par des moyens de traitement de données (21) d'un terminal (2), au moyen d'un CNN appris conformément au procédé selon l'une des revendications 1 à 8, dans lequel sont détectés les éléments d'intérêt de ladite première catégorie, ainsi que, pour chaque élément d'intérêt de la première catégorie détecté, les structures géométriques caractéristiques de ladite première catégorie d'élément d'intérêt, visibles dans ladite image.

10. Procédé selon la revendication 9, dans lequel le CNN appris conformément au procédé selon l'une des revendications 7 et 8, comprenant en outre la détection des éléments d'intérêt de la deuxième catégorie.

**11.** Procédé d'association d'éléments d'intérêt visibles dans une image, **caractérisé en ce qu'**il comprend la mise en œuvre par des moyens de traitement de données (21) d'un terminal (2) d'étapes de :

(a) Détection d'au moins un élément d'intérêt d'une première catégorie visible dans ladite image, d'au moins un élément d'intérêt d'une deuxième catégorie différente du premier ainsi que, pour chaque élément d'intérêt de la première catégorie détecté, de la ou les structures géométriques caractéristiques de ladite première catégorie d'élément d'intérêt, visibles dans ladite image, conformément au procédé de détection selon la revendication 10 ;

(b) Pour chaque paire d'un premier élément d'intérêt de la première catégorie détecté et d'un deuxième élément d'intérêt de la deuxième catégorie détecté, calcul d'un score de recouvrement entre une boite dudit deuxième élément et la ou les structures géométriques caractéristiques de ladite première catégorie d'élément d'intérêt pour le premier élément ;

(c) Mise en œuvre d'un algorithme d'optimisation combinatoire en fonction des scores de recouvrement calculés de sorte à associer chaque élément d'intérêt de la première catégorie détecté avec un élément d'intérêt de la deuxième catégorie détecté.

**12.** Procédé selon la revendication 11, dans lequel ledit vecteur de représentation comprend des valeurs descriptives d'au moins trois structures géométriques caractéristiques de ladite première catégorie d'élément d'intérêt, de sorte à détecter à l'étape (a), pour chaque élément d'intérêt de la première catégorie détecté, au moins trois structures géométriques caractéristiques de ladite première catégorie d'élément d'intérêt visibles dans ladite image, ledit score de recouvrement entre une boite dudit deuxième élément et le ou les points caractéristiques de ladite première catégorie d'élément d'intérêt pour le premier élément calculé à l'étape (b) étant un taux de recouvrement, en particulier le critère de Jaccard, entre ladite boite du deuxième élément et une enveloppe convexe des structures géométriques caractéristiques de ladite première catégorie d'élément d'intérêt pour le premier élément.

**13.** Procédé selon l'une des revendications 11 et 12, dans lequel ledit algorithme d'optimisation est l'algorithme hongrois.

**14.** Produit programme d'ordinateur comprenant des instructions de code pour l'exécution d'un procédé selon l'une des revendications 1 à 13 d'apprentissage de paramètres d'un réseau de neurones à convolution, CNN, de détection d'éléments d'intérêt visibles dans une image ou d'association d'éléments d'intérêt visibles dans une image, lorsque ledit programme est exécuté sur un ordinateur.

**15.** Moyen de stockage lisible par un équipement informatique sur lequel un produit programme d'ordinateur comprend des instructions de code pour l'exécution d'un procédé selon l'une des revendications 1 à 13 d'apprentissage de paramètres d'un réseau de neurones à convolution, CNN, de détection d'éléments d'intérêt visibles dans une image ou d'association d'éléments d'intérêt visibles dans une image.

FIG. 1a-1b

FIG. 2

(a) | Détection |

(b) | Calcul scores de recouvrement |

(c) | Association |

**FIG. 3**

| Type | Filters | Size/Stride | Output |
|---|---|---|---|
| Convolutional | 32 | 3 × 3 | 224 × 224 |
| Maxpool | | 2 × 2/2 | 112 × 112 |
| Convolutional | 64 | 3 × 3 | 112 × 112 |
| Maxpool | | 2 × 2/2 | 56 × 56 |
| Convolutional | 128 | 3 × 3 | 56 × 56 |
| Convolutional | 64 | 1 × 1 | 56 × 56 |
| Convolutional | 128 | 3 × 3 | 56 × 56 |
| Maxpool | | 2 × 2/2 | 28 × 28 |
| Convolutional | 256 | 3 × 3 | 28 × 28 |
| Convolutional | 128 | 1 × 1 | 28 × 28 |
| Convolutional | 256 | 3 × 3 | 28 × 28 |
| Maxpool | | 2 × 2/2 | 14 × 14 |
| Convolutional | 512 | 3 × 3 | 14 × 14 |
| Convolutional | 256 | 1 × 1 | 14 × 14 |
| Convolutional | 512 | 3 × 3 | 14 × 14 |
| Convolutional | 256 | 1 × 1 | 14 × 14 |
| Convolutional | 512 | 3 × 3 | 14 × 14 |
| Maxpool | | 2 × 2/2 | 7 × 7 |
| Convolutional | 1024 | 3 × 3 | 7 × 7 |
| Convolutional | 512 | 1 × 1 | 7 × 7 |
| Convolutional | 1024 | 3 × 3 | 7 × 7 |
| Convolutional | 512 | 1 × 1 | 7 × 7 |
| Convolutional | 1024 | 3 × 3 | 7 × 7 |
| Convolutional | 1000 | 1 × 1 | 7 × 7 |
| Avgpool | | Global | 1000 |
| Softmax | | | |

FIG. 4

Vehicle images
Person images
Face images

CNN

Face dataset

Person dataset

Vehicle dataset

Tronc commun

Face coding

Person coding

Vehicle coding

Detection loss function

Detection loss function

Detection loss function

Face ground truth

Person ground truth

Vehicle ground truth

**FIG. 5**

Usual encoded informations
of position and category

Additional keypoints information

| X | Y | W | H | C | KPv | KPx | KPy | ••• | KPv | KPx | KPy |

V: visibility
X;Y: position coordinates

## FIG. 6a

## FIG. 6b

Europäisches
Patentamt

European
Patent Office

Office européen
des brevets

# RAPPORT DE RECHERCHE EUROPEENNE

Numéro de la demande

EP 19 30 6259

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X | Kaipeng Zhang ET AL: "Joint Face Detection and Alignment using Multi-task Cascaded Convolutional Networks", , 11 avril 2016 (2016-04-11), XP055485690, Extrait de l'Internet: URL:https://arxiv.org/ftp/arxiv/papers/1604/1604.02878.pdf [extrait le 2018-06-19] * sect.II-III; figures 1, 2 * ----- | 1-15 | INV. G06K9/00 G06K9/62 |
| X | TANG XU ET AL: "PyramidBox: A Context-Assisted Single Shot Face Detector", 8 septembre 2018 (2018-09-08), SERIOUS GAMES; [LECTURE NOTES IN COMPUTER SCIENCE; LECT.NOTES COMPUTER], SPRINGER INTERNATIONAL PUBLISHING, CHAM, PAGE(S) 812 - 828, XP047496879, ISSN: 0302-9743 ISBN: 978-3-540-37274-5 [extrait le 2018-10-05] * sect.1, 3,; figures 1-3 * ----- | 1-15 | |
| X | DAI XIYANG ET AL: "Efficient Fine-Grained Classification and Part Localization Using One Compact Network", 2017 IEEE INTERNATIONAL CONFERENCE ON COMPUTER VISION WORKSHOPS (ICCVW), IEEE, 22 octobre 2017 (2017-10-22), pages 996-1004, XP033303547, DOI: 10.1109/ICCVW.2017.122 * sect.1 and 3; figure 1 * ----- | 1-15 | DOMAINES TECHNIQUES RECHERCHES (IPC) G06K |

Le présent rapport a été établi pour toutes les revendications

| Lieu de la recherche | Date d'achèvement de la recherche | Examinateur |
|---|---|---|
| La Haye | 3 décembre 2019 | Darolti, Cristina |

EPO FORM 1503 03.82 (P04C02)

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 1859158

**Littérature non-brevet citée dans la description**

- **JOSEPH REDMON ; ALI FARHADI.** *YOLO9000: Better, Faster, Stronger, https://arxiv.org/abs/1612.08242*

- *Faster R-CNN: Towards Real-Time Object Detection with Region Proposai Networks, https://arxiv.org/abs/1506.01497*